# EUROPÄISCHE PATENTANMELDUNG

(11) **EP 3 761 188 A1**
(43) Veröffentlichungstag der Anmeldung: **06.01.2021**
(21) Anmeldenummer: 19183899.4
(22) Anmeldetag: 02.07.2019
(51) Int. Cl.: G06F 16/2452

(54) **VERFAHREN UND ANORDNUNG ZUR BEREITSTELLUNG VON DATEN EINER INDUSTRIELLEN AUTOMATISIERUNGSANORDNUNG ZU EINER EXTERNEN ANORDNUNG**

(71) Anmelder: Siemens Aktiengesellschaft, 80333 München (DE)
(72) Erfinder: Fehling, Marcus, 81739 München (DE); Konopka, Frank, 90518 Altdorf (DE); Lamm, Tobias, 80469 München (DE); Tolks, Burkhard, 90471 Nürnberg (DE); Welp, Peter, 79336 Herbolzheim (DE)

(57) **Zusammenfassung**

Die Erfindung betrifft ein Verfahren und eine Anordnung zur Bereitstellung von Daten einer industriellen Automatisierungsanordnung (AA) zu einer externen Anwendung (AW), wobei die externe Anwendung (AW) außerhalb eines ersten Datennetzwerks der industriellen Automatisierungsanordnung (AA) angeordnet ist, insbesondere in einer Daten-Cloud und/oder eines zweiten Datennetzwerks betrieben wird, wobei durch eine Gateway-Komponente, insbesondere ein industrielles Edge-Gerät, Daten zumindest einer industriellen Automatisierungskomponente (AK) der industriellen Automatisierungsanordnung (AA) verarbeitet und die verarbeiteten Daten der externen Anwendung (AW) zur Verfügung gestellt werden. Dabei wird auf der Gateway-Komponente (GK) ein Datenverarbeitungsmodul (DVM) zur Verarbeitung der Daten der zumindest einen industriellen Automatisierungskomponente (AK) eingesetzt wird, wobei die Verarbeitung der Daten mittels des Datenverarbeitungsmoduls durch einen gekapselten und gegen Veränderung geschützten Verarbeitungsbaustein definiert wird, wobei der Verarbeitungsbaustein auf das Datenverarbeitungsmodul (DVM) geladen und dort ausgeführt wird, wobei das Datenverarbeitungsmodul (DVM) eine Abstrahierung der Daten durchführt, und wonach die abstrahierten Daten der externen Anwendung (AW) als die verarbeiteten Daten zur Verfügung gestellt werden.

## Beschreibung

Die Erfindung betrifft ein Verfahren zur Bereitstellung von Daten einer industriellen Automatisierungsanordnung zu einer externen Anordnung gemäß dem Oberbegriff des Patentanspruchs 1, und eine Anordnung zur Bereitstellung von Daten einer industriellen Automatisierungsanordnung zu einer externen Anwendung gemäß dem Oberbegriff des Patentanspruchs 6.

Maschinendaten, Produktionsdaten und Planungsdaten einer industriellen Automatisierungsanordnung sind regelmäßig in lokalen, zu öffentlichen Netzen abgeschotteten Produktionsnetzwerken verfügbar. Sie werden dort zur Steuerung und zur Kontrolle von industriellen Produktionsabläufen und Prozessen eingesetzt. Regelmäßig umfassen solche Daten auch vertrauliche Informationen, beispielsweise über Produktionsprozesse und Produktionsverfahren, so dass eine vollständige Weitergabe der auf der sogenannten Automatisierungsebene verfügbaren Informationen an externe Stellen unerwünscht ist. Umgekehrt ist auch ein direkter Zugriff von externen Instanzen, also Geräten außerhalb des privaten Automatisierungsnetzwerks, auf Geräte, Komponenten etc. des privaten Automatisierungsnetzwerkes oft unerwünscht bzw. mit Risiken verbunden.

Aus diesem Grund sind technische Maßnahmen gebräuchlich, um das private Automatisierungsnetzwerk in geeigneter Weise von öffentlichen Netzwerken, insbesondere dem Internet oder einer sogenannten "Cloud" ("Datenwolke"), abzutrennen. Eine solche Maßnahme kann beispielsweise im Vorsehen einer sogenannten "Firewall" bestehen. Damit ist es auch möglich, einen kontrollierten Zugriff zu bewerkstelligen, beispielsweise kann ein sogenannter "Tunnel" zwischen einem Gerät des privaten Automatisierungsnetzwerks und einem externen Server etabliert werden, womit auf eine abgesicherte Art und Weise ein privater Datenverkehr in oder über das öffentliche Datennetzwerk (z.B. Internet) bewerkstelligt werden kann.

Es ist auch bekannt, innerhalb des privaten Automatisierungsnetzwerkes bzw. an der "Grenze" zwischen dem privaten Automatisierungsnetzwerk und dem öffentlichen Netzwerk ein sogenanntes Edge-Gerät oder Edge-Device anzuordnen, das zum einen dazu dient, im Automatisierungsnetzwerk Ressourcen zur Datenverarbeitung zur Verfügung zu stellen, und zum anderen dazu dient, Daten aus dem Automatisierungsnetzwerk einer externen Instanz, beispielsweise einer cloudbasierten Lösung, zur Verfügung zu stellen, und umgekehrt Daten und Befehle von einer cloudbasierten Anwendung zu empfangen und in dem privaten Automatisierungsnetzwerk anzuwenden.

Sofern der Betreiber der cloudbasierten, externen Anwendung und des Automatisierungsnetzwerkes entweder identisch sind, oder aber ein besonderes Vertrauensverhältnis untereinander besteht, kann mit einer solchen Edge-Device basierten Lösung der Datenverkehr zwischen den Automatisierungskomponenten des industriellen Automatisierungsnetzwerkes bzw. der industriellen Automatisierungsanordnung einerseits und der externen Anwendung andererseits einvernehmlich geplant und realisiert werden.

Ein Problem kann dann bestehen, wenn konkrete produktionsbezogene Daten, also Daten des privaten Automatisierungsnetzwerkes, nicht außerhalb der Produktionsumgebung (Automatisierungsanordnung) verfügbar sein sollen, andererseits aber seitens einer externen Anwendung das Erfordernis besteht, dass diese Daten verfügbar sind, um Geschäftsmodelle, Optimierungen oder dergleichen zu ermöglichen.

In einem Beispiel stellt ein Hersteller von Produktionsmaschinen dem Betreiber einer Automatisierungsanordnung eine Maschine zur Verfügung, wobei der Einsatz der Maschine nach Einsatzzeiten, Belastung oder Stückzahl der durchgeführten Produktionsvorgänge vergütet werden soll. Solche Bezahlungsmodelle sind auch als "Pay-per-use" bekannt. Der Hersteller und gleichzeitig Eigentümer der Produktionsmaschine hat also ein rechtmäßiges Interesse daran, regelmäßig, beispielsweise zumindest monatlich, Daten über den Einsatz oder die Auslastung der Produktionsmaschine und über etwaige Produktionsereignisse, beispielsweise Schäden oder Überlastung, zu erhalten, um den Einsatz der Maschine entsprechend in Rechnung stellen zu können und Wartung und Instandsetzung planen zu können. Andererseits hat der Benutzer der Produktionsmaschine, also der Betreiber der Automatisierungsanordnung, ein Interesse daran, dass nicht unnötig viele Details über seine Produktion, beispielsweise über Produktionszyklen, Auftragsspitzen oder -flauten, Art der hergestellten Produkte etc. zu veröffentlichen und damit auch ein Interesse daran, dass solche Details nicht an den Eigentümer der Produktionsmaschine übermittelt werden. Es besteht also oft ein Interessenskonflikt über die Nutzung der Daten und die Zugriffsrechte.

Es ist also eine Aufgabe der vorliegenden Erfindung, technische Mittel bzw. ein technisches Verfahren bereitzustellen, mit dem auf vertrauenswürdige Art und Weise Daten einer privaten industriellen Automatisierungsanordnung einer externen Anwendung zur Verfügung gestellt werden können.

Das Problem kann erfindungsgemäß dadurch gelöst werden, dass dem Eigentümer der Produktionsmaschine bzw. dessen Anwendung, nämlich dem Programm zur Rechnungsstellung, abstrahierte Daten zur Verfügung gestellt werden. So können abstrahierte Daten beispielsweise kumulierte Einsatzdaten und Belastungsdaten der verliehenen Produktionsmaschine sein, wobei aber konkrete Daten, die beispielsweise Schwankungen des Auftragsbestandes über einen Monat hinweg erkennen lassen könnten, aus den kumulierten und damit abstrahierten Daten nicht mehr auslesbar sind. Das kann sogar bedeuten, dass seitens des "Kunden", der die Maschine betreibt, die Rechnung erstellt wird.

Problematisch ist es, dass der Eigentümer der Produktionsmaschine darauf vertrauen können muss, dass die abstrahierten Daten korrekt errechnet wurden und somit die korrekte Auslastung bzw. Abnutzung der Produktionsmaschine reflektieren. Andererseits muss der Betreiber der Automatisierungsanordnung darauf vertrauen können, dass die Abstrahierung der Daten seinen Bedürfnissen gerecht wird, also dass nicht "unbemerkt" vertrauliche Produktionsdaten herausgegeben werden.

Erfindungsgemäß erfolgt die Abstrahierung der Daten durch ein zertifiziertes und gegen Manipulation geschützes Vearbeitungsmodul, welches dahingehend überprüft oder überprüfbar ist, ob die Abstraktion der Daten den beiderseitigen Bedingungen entspricht.

Die Aufgabe wird erfindungsgemäß durch ein Verfahren gemäß Patentanspruch 1 und durch eine Vorrichtung (Komponente) gemäß Patentanspruch 6 gelöst.

Dabei ist ein Verfahren zur Bereitstellung von Daten einer industriellen Automatisierungsanordnung zu einer externen Anwendung vorgesehen, wobei die externe Anwendung außerhalb eines ersten Datennetzwerks der industriellen Automatisierungsanordnung angeordnet ist, insbesondere in einer Daten-Cloud und/oder eines zweiten Datennetzwerks, betrieben wird, wobei durch eine Gateway-Komponente, insbesondere ein industrielles Edge-Gerät, Daten zumindest einer industriellen Automatisierungskomponente der industriellen Automatisierungsanordnung verarbeitet und die verarbeiteten Daten der externen Anwendung zur Verfügung gestellt werden. Dabei wird auf der Gateway-Komponente ein Datenverarbeitungsmodul zur Verarbeitung der Daten der zumindest einen industriellen Automatisierungskomponente eingesetzt, wobei die Verarbeitung der Daten mittels des Datenverarbeitungsmoduls durch einen gekapselten und gegen Veränderung geschützten Verarbeitungsbaustein definiert wird, wobei der Verarbeitungsbaustein auf das Datenverarbeitungsmodul geladen und dort ausgeführt wird, wobei das Datenverarbeitungsmodul eine Abstrahierung der Daten durchführt, und wonach die abstrahierten Daten der externen Anwendung als die verarbeiteten Daten zur Verfügung gestellt werden. Durch dieses Verfahren ist es möglich, die an die externe Anwendung weiterzugebenden Daten in einem vertrauenswürdigen, lokal betriebenen Modul (Verarbeitungsbaustein, Doorkeeper) zu abstrahieren. Damit wird einem externen Anwender die Nutzung der Daten ermöglicht, ohne dass er Zugriff auf die zu Grunde liegenden Rohdaten haben muss.

Die Erfindung wird außerdem durch eine Komponente zur Bereitstellung von Daten einer industriellen Automatisierungsanordnung zu einer externen Anwendung gelöst, wobei die externe Anwendung außerhalb eines ersten Datennetzwerks der industriellen Automatisierungsanordnung angeordnet ist, insbesondere in einer Daten-Cloud und/oder eines zweiten Datennetzwerks, wobei durch eine Gateway-Komponente, insbesondere ein industrielles Edge-Gerät, Daten zumindest einer industriellen Automatisierungskomponente der industriellen Automatisierungsanordnung verarbeitet und die verarbeiteten Daten der externen Anwendung verfügbar sind. Dabei ist auf der Gateway-Komponente ein Datenverarbeitungsmodul zur Verarbeitung der Daten der zumindest einen industriellen Automatisierungskomponente vorgesehen, wobei die Verarbeitung der Daten mittels des Datenverarbeitungsmoduls durch einen gekapselten und gegen Veränderung geschützten Verarbeitungsbaustein definiert ist, wobei der Verarbeitungsbaustein auf das Datenverarbeitungsmodul geladen ist und dort ausführbar ist, wobei das Datenverarbeitungsmodul zur Abstrahierung der Daten eingerichtet ist, und wobei die abstrahierten Daten der externen Anwendung als die verarbeiteten Daten zur Verfügung stehen. Durch diese Komponente könnten die Vorteile realisiert werden, die bereits anhand des Verfahrens diskutiert wurden.

Vorteilhafte Ausgestaltungen der Erfindung sind in den abhängigen Patentansprüchen angegeben. Die dort beschriebenen Merkmale und deren Vorteile können sowohl einzeln, als auch in sinnfälliger Kombination miteinander realisiert werden.

Vorteilhaft ist in dem Verarbeitungsbaustein ein Modell zur Definition der Abstrahierung der Daten der zumindest einen industriellen Automatisierungskomponente gespeichert. Dies hat den Vorteil, dass die Abstrahierung der Daten durch ein maschinenunabhängiges, semantisches Modell festgelegt werden kann. Insbesondere kann ein solches Modell durch eine Person festgelegt werden, die keine Programmiersprache beherrscht. Außerdem sind solche Modelle universell verwendbar und transferierbar.

Vorteilhaft ist dem Verarbeitungsbauteil bzw. dem darin enthaltenen Modell eine maschinenlesbare Beschreibung zugeordnet, wobei die Beschreibung Informationen über die zu verarbeitenden Daten der Automatisierungskomponente und über einen Grad oder die Art der Abstrahierung der Daten durch den Verarbeitungsbaustein oder durch das darin verwirklichte oder geladene Modell umfasst, wobei vor einer Ausführung des Verarbeitungsbausteins oder des Modells die Beschreibung gegen ein Regelwerk geprüft wird, wobei durch das Regelwerk Regeln über erlaubte oder verbotene Zugriffe auf die Daten der Automatisierungskomponente und/oder Regeln über die erforderliche Abstrahierung der Daten durch den Verarbeitungsbaustein vorgegeben sind, und wobei der Verarbeitungsbaustein und ggf. das darin enthaltene Modell zur Abstrahierung der Daten nur im Falle einer Konformität zu dem Regelwerk zur Ausführung freigegeben wird.

Durch solche Meta-Informationen ist es möglich, den Verarbeitungsbaustein oder das darin verwirklichte Modell zu überprüfen, was in einer vorteilhaften Variante auch automatisch oder teilautomatisch geschehen kann. Vorteilhaft werden diese Meta-Informationen, also die maschinenlesbare Beschreibung, die beispielsweise in Form einer XML-Datei vorliegen kann, dem Verarbeitungsbaustein oder dem zugrunde liegenden Modell zur Definition der Abstrahierung der Daten untrennbar hinzugefügt und von einem Provider des Verarbeitungsbausteins mitgeliefert. Insbesondere ist es damit möglich, vorzugeben, inwieweit Rohdaten mindestens abstrahiert werden müssen. So ist es beispielsweise möglich, für bestimmte Eingangswerte, beispielsweise Betriebszeiten einer Maschine, zu definieren, dass diese Daten nur in Form eines Mittelwertes oder eines kumulierten Wertes über einen Monat weitergegeben werden. Dabei ist es also vorteilhaft, wenn die maschinenlesbare Beschreibung des Verarbeitungsbausteins und eine maschinenlesbare Beschreibung eines Regelwerks syntaxkompatibel sind, um einen Vergleich, sowohl manueller als auch maschinenlesbarer Art, zu vereinfachen.

Vorteilhaft wird der Verarbeitungsbaustein zertifiziert, wobei ein Einsatz nur bei Vorliegen eines gültigen Zertifikats erfolgen darf. Das Zertifikat kann zum einen garantieren, dass der Verarbeitungsbaustein und das darin möglicher Weise enthaltene oder geladene Modell nicht manipuliert worden ist. Des Weiteren kann das Zertifikat von einer vertrauenswürdigen Stelle ausgestellt werden, insbesondere einer unabhängigen Instanz, die den Verarbeitungsbaustein entweder kontrolliert oder sogar erstellt hat, und deren Zertifikat sowohl von der Datenquelle, also dem Betreiber der Automatisierungskomponente, als auch von der Datensenke, also dem Betreiber der externen Anwendung, vertraut wird.

Vorteilhaft wird der Verarbeitungsbaustein oder zumindest ein im Verarbeitungsbaustein vorliegendes Modell zur Abstrahierung der Daten mittels eines Dienstes zur Bereitstellung für industrielle Applikationen, insbesondere einen industriellen App-Store, zur Verfügung gestellt. In einer vorteilhaften Variante ist das ein ähnlicher oder sogar derselbe App-Store, der auch für ein industrielles Edge-Device Anwendungen bereitstellt. Dies gilt insbesondere in den Fällen, in denen der Verarbeitungsbaustein oder sogar das Datenverarbeitungsmodul zur Ausführung des Verarbeitungsbausteins als eine Anwendung (App) für das industrielle Edge-Device ausgeführt ist. In diesem Fall ergibt sich weiterhin der Vorteil, dass ein industrielles Edge-Device ohnehin Zugriff auf die Automatisierungsdaten der unterlagerten Automatisierungskomponenten hat, und somit die Rohdaten zur Verarbeitung durch das Verarbeitungsmodul bzw. den Verarbeitungsbaustein liefern kann. Insbesondere weist ein industrielles Edge-Device in der Regel auch Kommunikationskanäle nach "außen", also in eine externe Umgebung, eine "Cloud" oder das Internet, auf.

Ein Ausführungsbeispiel des erfindungsgemäßen Verfahrens und damit auch ein Ausführungsbeispiel der erfindungsgemäßen Komponente wird nachfolgend anhand der Zeichnung erläutert.

Dabei zeigt die einzige Figur in schematischer Darstellung eine Automatisierungsanordnung, die über eine erfindungsgemäße Komponente mit einer externen Anwendung verknüpft ist.

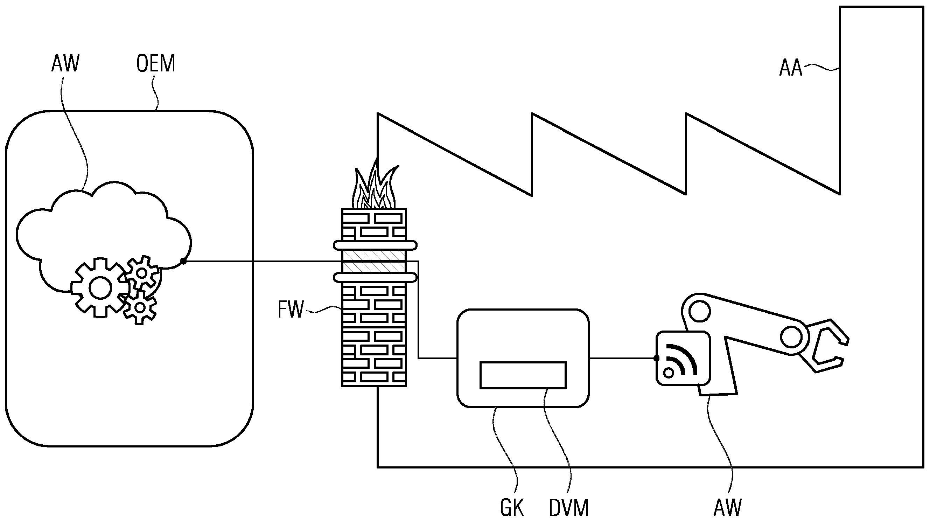

Die Figur zeigt eine industrielle Automatisierungsanordnung AA, die beispielsweise eine Fabrikationsstelle eines Produzenten ist. In der Automatisierungsanordnung AA werden verschiedene Komponenten wie speicherprogrammierbare Steuerungen, HMI-Geräte, MES-Systeme und dergleichen betrieben, wobei in der Figur 1 exemplarisch nur eine Automatisierungskomponente AK (beispielsweise eine Werkzeugmaschine) dargestellt ist. Produktionsdaten der Automatisierungskomponente AK können durch die Gateway-Komponente GK, die im vorliegenden Ausführungsbeispiel ein industrielles Edge-Device ist, zugegriffen werden. Die Gateway-Komponente GK kann durch eine datentechnische Firewall FW der Automatisierungsanordnung AA Daten mit einer externen Anwendung AW austauschen, wobei die externe Anwendung AW im Datennetz eines Service-Anbieters OEM angeordnet ist. Die Verbindung zwischen der Gateway-Komponente GK und der externen Anwendung AW kann beispielsweise über einen Datenkanal im Internet erfolgen. Der Betreiber der externen Anwendung AW, der Service-Anbieter OEM, ist in diesem Ausführungsbeispiel Eigentümer der Automatisierungskomponente AK.

Das erfindungsgemäße Verfahren wird in diesem Kontext angewendet, um das Geschäftsmodell des Service-Anbieters OEM, der Eigentümer der Automatisierungskomponente AK ist, zu ermöglichen. Das Geschäftsmodell sieht ein sogenanntes "Pay-per-Use" vor, also ein laufzeit- und belastungsabhängiges Vergütungsmodell für den Einsatz der Maschine.

Der in einem externen Netzwerk angesiedelte Hersteller bzw. Serviceanbieter OEM benötigt für die Abrechnung und Wartung der Maschine, der Automatisierungskomponente AK, entsprechende Informationen. Diese Daten sollen aber nach dem Wunsch des Nutzers, also des Betreibers der Automatisierungsanordnung AA, in einer Form vorliegen, die keine Rückschlüsse auf Produktionsdetails ermöglicht. Zu diesem Zweck definiert der Service-Anbieter OEM eine Datenvorverarbeitung, die die Rohdaten aus dem industriellen Umfeld vorverarbeitet und dabei derart abstrahiert, so dass nur solche Informationen an seine Datenverarbeitung und Buchhaltung übermittelt werden, die für das Anbieten des Geschäftsmodells oder Services unbedingt benötigt werden. Dazu definiert der Service-Anbieter OEM (Hersteller der Maschine) ein Modell zur Abstrahierung der Daten, welches beispielsweise in einer domänen-spezifischen Sprache, einer Datenbankabfragesprache (z.B. SQL), durch ein klassisches Berechnungsprogramm (z.B. Matlab des Anbieters The Mathworks) oder dergleichen vorliegt. Dabei ist wichtig, dass sowohl der Datenzugriff auf die Produktionsdaten der Automatisierungskomponente AK als auch die Datenverarbeitung (Abstrahierung) modelliert werden können.

Vorteilhaft wird eine solche Abfrage und Vorverarbeitung (Abstrahierung) der Daten, also das Modell, gekapselt, beispielsweise in einem Verarbeitungsbaustein (Container), also mit ablauffähigem Programmcode geliefert. Dabei ist wichtig, dass Integrität, Authentizität und Knowhow-Schutz gewährleistet sind, was bedeutet, dass sowohl die Belange des Service-Anbieters OEM als auch die Belange des Betreibers der Automatisierungsanordnung AA nachhaltig berücksichtigt werden können. Vorteilhaft wird also der Verarbeitungsbaustein, der das Modell zur Definition der Abstrahierung der Daten und das Modell zum Zugriff auf die Daten enthält, zertifiziert und in einer weiteren vorteilhaften Variante auch verschlüsselt.

Dem Verarbeitungsbaustein ist in der vorliegenden Variante als sogenannte Meta-Information eine Beschreibung in Form einer XML-Datei beigefügt, die sowohl die zugegriffenen Rohdaten definiert, als auch die Abstrahierung der Rohdaten beschreibt und die Ausgabeparameter der damit bewerkstelligten Datenverarbeitung bzw. Datenabstrahierung angibt. Im vorliegenden Beispiel wird dem Betreiber der Automatisierungsanordnung AA die Möglichkeit geboten, die Abstrahierung zu zertifizieren und zu überprüfen bzw. freizugeben, was durch eine unabhängige Instanz (z.B. TÜV - Technischer Überwachungsverein) durchgeführt werden kann. Im vorliegenden Ausführungsbeispiel hat der Betreiber der Automatisierungsanordnung AA ein Regelwerk definiert, welches ebenfalls in Form einer XML-Datei vorliegt. In diesem Regelwerk sind sowohl diejenigen Datenpunkte zur Gewinnung der Rohdaten definiert, auf die zugegriffen werden darf, als auch vorgegeben, in welcher Form diese Daten verarbeitet werden müssen, also einen minimalen Grad der Abstrahierung. Im vorliegenden Fall gibt dieses Regelwerk an, dass auf Einsatzzeiten zugegriffen werden kann, auf maximale Drehmomente eines Antriebs der Automatisierungskomponente AK und auf Alarmmeldungen. In dem Regelwerk ist weiterhin definiert, dass Alarme nur ohne Zeitstempel weitergegeben werden dürfen, dass Einsatzzeiten kumuliert über einen Monat weitergebeben werden dürfen, und dass Drehmomentwerte eines Antriebs nur hinsichtlich der Häufigkeit des Erreichens eines bestimmten Drehmomentes ("Überlast") weitergegeben werden dürfen. Das Regelwerk und die Meta-Informationen des Verarbeitungsbausteins können also automatisch miteinander abgeglichen werden, so dass eine Maschine im Falle einer erfolgreichen Überprüfung ein Einsatzzertifikat vergeben und dem Verarbeitungsbaustein hinzufügen kann.

Der Verarbeitungsbaustein wird inklusive des Zertifikats in einen industriellen App-Store eines Anbieters der Gateway-Komponente GK, also des industriellen Edge-Devices, hinzugefügt, und aus diesem abgerufen und auf der Gateway-Komponente GK installiert und zur Ausführung gebracht.

Bei der Ausführung greift der Verarbeitungsbaustein bzw. das Datenverarbeitungsmodul (die Laufzeitumgebung), in der der Verarbeitungsbaustein ausgeführt wird, auf die prinzipiell vertraulichen Maschinendaten der Automatisierungskomponente AK zu. In einer Variante kann auch auf Planungsdaten oder andere lokale Daten jeglicher Art zugegriffen werden, sofern das zur Ausführung des Services der externen Anwendung AW notwendig ist. Dies bedeutet, dass auch die Daten mehrerer industrieller Komponenten miteinander kombiniert werden können.

Anstelle der Bereitstellung des Verarbeitungsbausteins über einen App-Store ist auch eine lokale Verteilung mittels Datenträger, Netzwerk-Streaming ("Download") oder dergleichen möglich.

Anstelle des hier gezeigten Ausführungsbeispiels des "Pay-per-Use"-Anwendungsfalls kann das hier geschilderte Verfahren und die Komponente (Verarbeitungsbaustein) auch für eine vorausschauende Instandhaltung (predictive maintenance), eine Restwertbestimmung (z.B. für eine steuerliche Abschreibung), für eine Kalkulation von Versicherungsrisiken oder dergleichen verwendet werden. Der Service-Anbieter OEM kann also auch eine Bank, eine Versicherung, ein Unternehmen für Wartungsdienstleistungen oder ein anderer "Daten-Konsument" sein.

Während des laufenden Betriebs der industriellen Automatisierungsanordnung AA werden nun durch den Verarbeitungsbaustein in dem Datenverarbeitungsmodul DVM permanent die in dem Abstrahierungsmodell definierten Rohdaten der Automatisierungskomponente AK erfasst, protokolliert und gemäß der definierten Abstrahierung verarbeitet. Die verarbeiteten Daten werden dann über eine Datenverbindung der Anwendung AW zur Verfügung gestellt.

## Patentansprüche

1. Verfahren zur Bereitstellung von Daten einer industriellen Automatisierungsanordnung (AA) zu einer externen Anwendung (AW),
wobei die externe Anwendung (AW) außerhalb eines ersten Datennetzwerks der industriellen Automatisierungsanordnung (AA) angeordnet ist, insbesondere in einer Daten-Cloud und/oder eines zweiten Datennetzwerks, betrieben wird,
wobei durch eine Gateway-Komponente (GK), insbesondere ein industrielles Edge-Gerät, Daten zumindest einer industriellen Automatisierungskomponente der industriellen Automatisierungsanordnung (AA) verarbeitet und die verarbeiteten Daten der externen Anwendung (AW) zur Verfügung gestellt werden, **dadurch gekennzeichnet, dass**
auf der Gateway-Komponente (GK) ein Datenverarbeitungsmodul (DVM) zur Verarbeitung der Daten der zumindest einen industriellen Automatisierungskomponente eingesetzt wird,
wobei die Verarbeitung der Daten mittels des Datenverarbeitungsmoduls durch einen gekapselten und gegen Veränderung geschützten Verarbeitungsbaustein definiert wird,
wobei der Verarbeitungsbaustein auf das Datenverarbeitungsmodul (DVM) geladen und dort ausgeführt wird,
wobei das Datenverarbeitungsmodul (DVM) eine Abstrahierung der Daten durchführt, und
wonach die abstrahierten Daten der externen Anwendung (AW) als die verarbeiteten Daten zur Verfügung gestellt werden.

2. Verfahren nach Patentanspruch 1,
**dadurch gekennzeichnet, dass**
in dem Verarbeitungsbaustein ein Modell zur Definition der Abstrahierung der Daten der zumindest einen industriellen Automatisierungskomponente gespeichert wird.

3. Verfahren nach einem der vorhergehenden Patentansprüche,
**dadurch gekennzeichnet, dass**
dem Verarbeitungsbaustein eine maschinenlesbare Beschreibung zugeordnet wird,
wobei die Beschreibung Informationen über die zu verarbeitenden Daten der zumindest einen industriellen Automatisierungskomponente und über einen Grad oder die Art der Abstrahierung der Daten durch den Verarbeitungsbaustein umfasst,
wobei vor einer Ausführung des Verarbeitungsbausteins die Beschreibung durch eine Kontrolleinheit eines Betreibers der industriellen Automatisierungsanordnung (AA) gegen ein Regelwerk geprüft wird,
wobei das Regelwerk Regeln über erlaubte oder verbotene Zugriffe auf die Daten und/oder Regeln über die erforderliche Abstrahierung der Daten durch den Verarbeitungsbaustein umfasst,
wobei der Verarbeitungsbaustein nur im Falle einer Konformität zu dem Regelwerk zur Ausführung freigegeben wird.

4. Verfahren nach einem der vorhergehenden Patentansprüche,
**dadurch gekennzeichnet, dass**
der Verarbeitungsbaustein zertifiziert wird,
wobei ein Einsatz nur bei Vorliegen eines gültigen Zertifikats erfolgt.

5. Verfahren nach einem der vorhergehenden Patentansprüche,
**dadurch gekennzeichnet, dass**
der Verarbeitungsbaustein oder ein im Verarbeitungsbaustein vorliegendes Modell zur Abstrahierung der Daten mittels eines Dienstes zur Bereitstellung für industrielle Applikationen, insbesondere einen industriellen App-Store, zur Verfügung gestellt wird.

6. Komponente zur Bereitstellung von Daten einer industriellen Automatisierungsanordnung (AA) zu einer externen Anwendung (AW),
wobei die externe Anwendung (AW) außerhalb eines ersten Datennetzwerks der industriellen Automatisierungsanordnung (AA) angeordnet ist, insbesondere in einer Daten-Cloud und/oder eines zweiten Datennetzwerks,
wobei durch eine Gateway-Komponente, insbesondere ein industrielles Edge-Gerät, Daten zumindest einer industriellen Automatisierungskomponente der industriellen Automatisierungsanordnung (AA) verarbeitet und die verarbeiteten Daten der externen Anwendung (AW) verfügbar sind,
**dadurch gekennzeichnet, dass**
auf der Gateway-Komponente (GK) ein Datenverarbeitungsmodul (DVM) zur Verarbeitung der Daten der zumindest einen industriellen Automatisierungskomponente vorgesehen ist,
wobei die Verarbeitung der Daten mittels des Datenverarbeitungsmoduls durch einen gekapselten und gegen Veränderung geschützten Verarbeitungsbaustein definiert ist,
wobei der Verarbeitungsbaustein auf das Datenverarbeitungsmodul (DVM) geladen ist und dort ausführbar ist,
wobei das Datenverarbeitungsmodul (DVM) zur Abstrahierung der Daten eingerichtet ist, und
dass die abstrahierten Daten der externen Anwendung (AW) als die verarbeiteten Daten zur Verfügung stehen.

7. Vorrichtung zur Bereitstellung von Daten einer industriellen Automatisierungsanordnung (AA) gemäß Patentanspruch 6,
**dadurch gekennzeichnet, dass**
in dem Verarbeitungsbaustein ein Modell zur Definition der Abstrahierung der Daten der zumindest einen industriellen Automatisierungskomponente gespeichert ist.

8. Vorrichtung zur Bereitstellung von Daten einer industriellen Automatisierungsanordnung (AA) nach einen der vorhergehenden Ansprüche 6 bis 7,
**dadurch gekennzeichnet, dass**
dem Verarbeitungsbaustein eine maschinenlesbare Beschreibung zugeordnet ist,
wobei die Beschreibung Informationen über die zu verarbeitenden Daten der zumindest einen industriellen Automatisierungskomponente und über den Grad oder die Art der Abstrahierung der Daten durch den Verarbeitungsbaustein umfasst,
wobei vorgesehen ist, dass vor einer Ausführung des Verarbeitungsbausteins die Beschreibung durch eine Kontrolleinheit eines Betreibers der industriellen Automatisierungsanordnung (AA) gegen ein Regelwerk geprüft wird,
wobei das Regelwerk Regeln über erlaubte oder verbotene Zugriffe auf die Daten und/oder Regeln über die erforderliche Abstrahierung der Daten durch den Verarbeitungsbaustein umfasst, und
wobei vorgesehen ist, dass der Verarbeitungsbaustein nur im Falle einer Konformität zu dem Regelwerk zur Ausführung freigegeben wird.

9. Vorrichtung zur Bereitstellung von Daten einer industriellen Automatisierungsanordnung (AA) nach einen der vorhergehenden Ansprüche 6 bis 8,
der Verarbeitungsbaustein zertifiziert ist,
wobei ein Einsatz nur bei Vorliegen eines gültigen Zertifikats erfolgt.

10. Vorrichtung zur Bereitstellung von Daten einer industriellen Automatisierungsanordnung (AA) nach einen der vorhergehenden Ansprüche 6 bis 9,
**dadurch gekennzeichnet, dass**
der Verarbeitungsbaustein oder ein im Verarbeitungsbaustein vorliegendes Modell zur Abstrahierung der Daten mittels eines Dienstes zur Bereitstellung für industrielle Applikationen, insbesondere einen industriellen App-Store, zur Verfügung gestellt ist.
